# EUROPÄISCHE PATENTANMELDUNG

(11) **EP 1 629 955 A2**
(43) Veröffentlichungstag der Anmeldung: **01.03.2006**
(21) Anmeldenummer: 05017176.8
(22) Anmeldetag: 06.08.2005
(51) Int. Cl.: B29C 45/14

(54) **Verfahren zur Herstellung einer als Kunststoff-Spritzgussteil gefertigten Entnahmearmatur für Transport- und Lagerbehälter aus Kunststoff oder Metall für Flüssigkeiten**

(30) Priorität: 18.08.2004 DE 102004039961
(71) Anmelder: PROTECHNA S.A., 1701 Fribourg (CH)
(72) Erfinder: Schütz, Udo, 56242 Selters / Westerwald (DE)
(74) Vertreter: Pürckhauer, Rolf

(57) **Zusammenfassung**

Ein erstes Verfahren zur Herstellung einer als KunststoffSpritzgußteil gefertigten Entnahmearmatur für Transport- und Lagerbehälter aus Kunststoff oder Metall für Flüssigkeiten ist dadurch gekennzeichnet, daß in einem ersten Verfahrensschritt die Überwurfmutter (15) zum Anschrauben der Armatur an den Auslaufstutzen (16) eines Flüssigkeitsbehälters (17) in einem ersten Spritzgießwerkzeug hergestellt wird, anschließend die Überwurfmutter in ein zweites Spritzgießwerkzeug eingelegt und danach in einem zweiten Verfahrensschritt das Armaturengehäuse (2) in dem zweiten Spritzgießwerkzeug derart hergestellt wird, daß der Einlaufstutzen (7) des Armaturengehäuses die Durchgangsöffnung (22) der Ringschulter (20) und die Gewindebohrung (23) der Überwurfmutter (15) mit Spiel durchsetzt und der Bund (19) des Einlaufstutzens (17) des Armaturengehäuses (2) innerhalb der Überwurfmutter (15) angeordnet ist.

Bei einem zweiten Verfahren werden in einem ersten Verfahrensschritt das Armaturengehäuse (2) und der Einlaufstutzen (7) desselben als gesonderte Teile spritzgegossen und in einem zweiten Verfahrensschritt wird der Einlaufstutzen (7) mit einer aufgeschobenen Überwurfmutter (15) an das Armaturengehäuse (2) angeschweißt.

## Beschreibung

Die Erfindung betrifft ein Verfahren zur Herstellung einer als Kunststoff-Spritzgußteil gefertigten Entnahmearmatur, insbesondere eines Klappen- oder Kugelhahns, für Transport- und Lagerbehälter aus Kunststoff oder Metall für Flüssigkeiten, mit einem Armaturengehäuse, das einen Einlaufstutzen mit einer auf diesem zwischen einem Bund des Einlaufstutzens und den Lagerstutzen des Armaturengehäuses für die Drehwelle des Schließelements unverlierbar gehaltenen und verschiebbaren Überwurfmutter zum Anschrauben des Armaturengehäuses an den mit einem Außengewinde versehenen Auslaufstutzen des Flüssigkeitsbehälters und einen Auslaufstutzen besitzt.

Aus der DE 103 01 517 B3 ist ein Transport- und Lagerbehälter für Flüssigkeiten mit einem auf einem palettenartigen Untergestell stehenden Innenbehälter aus Kunststoff und einem äußeren Gittermantel bekannt. Die Entnahmearmatur des Innenbehälters wird mittels einer unverlierbar auf dem Einlaufstutzen der Armatur angeordneten Überwurfmutter aus Kunststoff, die aus zwei Mutterhälften auf dem Einlaufstutzen zusammengeschweißt wird, an den Auslaufstutzen des Innenbehälters angeschraubt. Bei einer Herstellung der Überwurfmutter aus Aluminium werden die beiden Mutterhälften auf dem Einlaufstutzen der Entnahmearmatur zusammengenietet. Eine derartige unverlierbare Anbringung einer Überwurfmutter auf dem Einlaufstutzen einer Entnahmearmatur ist umständlich und zeitaufwendig und führt zu einer Verteuerung der Herstellungskosten.

Der Erfindung liegt die Aufgabe zugrunde, ein kostengünstiges Verfahren zur Herstellung einer als Kunststoff-Spritzgußteil gefertigten Entnahmearmatur für Flüssigkeitsbehälter aus Kunststoff oder Metall mit einem Armaturengehäuse zu entwickeln, das einen Einlaufstutzen mit einer auf diesem unverlierbar gehaltenen Überwurfmutter zum Anschrauben des Armaturengehäuses an den mit einem Außengewinde versehenen Auslaufstutzen des Flüssigkeitsbehälters besitzt.

Diese Aufgabe wird erfindungsgemäß gelöst durch die Herstellungsverfahren gemäß den Patentansprüchen 1 und 2.

Die erfindungsgemäßen Verfahren sind nachstehend anhand von Zeichnungsfiguren erläutert, die folgendes darstellen:

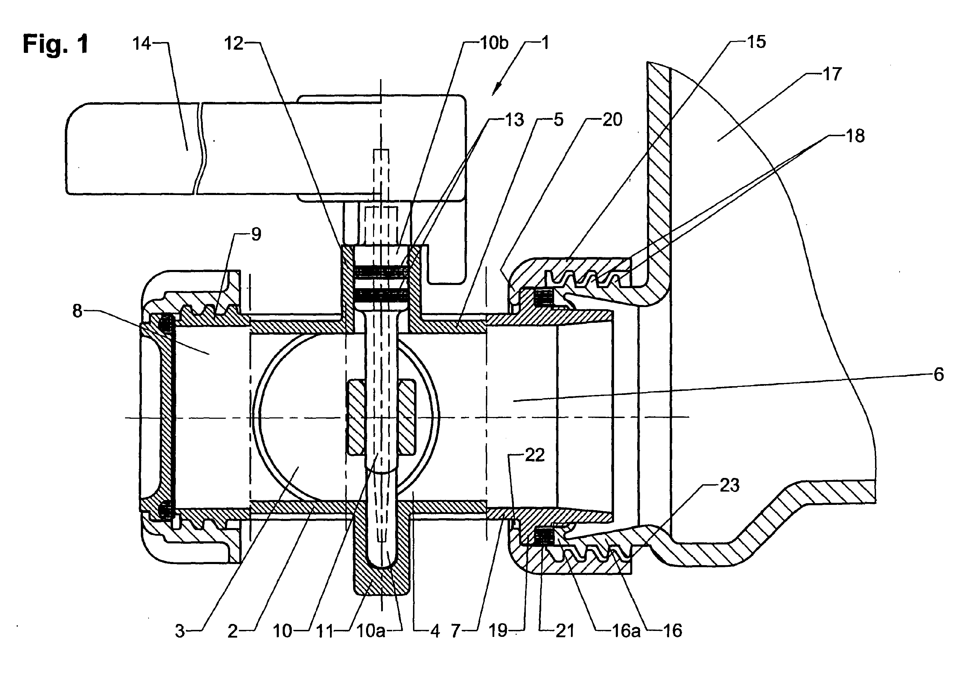

- Fig. 1: eine Längsschnittdarstellung eines nach dem ersten Verfahren hergestellten Klappenhahns, die
- Fig. 2a und 2b: Seitenansichten des Gehäuses und des Einlaufstutzens eines Klappenhahns, die als Kunststoff-Spritzgußteile hergestellt sind, und
- Fig. 3: eine Seitenansicht eines Klappenhahns, dessen Gehäuse und dessen Einlaufstutzen mit aufgesetzter Überwurfmutter gemäß dem zweiten Verfahren zusammengeschweißt sind.

Das aus einem Polyethylen hoher Dichte (PE-HD) hergestellte Hahngehäuse 2 des Klappenhahns 1 nimmt eine Klappenscheibe 3 zum Öffnen und Schließen der zentralen Durchflußöffnung 4 der Gehäusekammer 5 auf, die mit dem Einlaufkanal 6 des Einlaufstutzens 7 und dem Auslaufkanal 8 des Auslaufstutzens 9 des Hahngehäuses 2 in Verbindung steht. Die Klappenscheibe 3 ist exzentrisch an einer Drehwelle 10 befestigt, deren beide Enden 10a, 10b in Lagerstutzen 11, 12 des Hahngehäuses 2 drehbar gelagert sind, wobei das obere Ende 10b der Drehwelle 3 über den Lagerstutzen 12 aus dem Hahngehäuse 2 nach außen vorsteht. Die Drehwelle 10 ist mittels Dichtringen 13 in dem Lagerstutzen 12 nach außen abgedichtet. Auf dem aus dem Hahngehäuse 2 herausragenden Ende 10b der Drehwelle 10 der Klappenscheibe 3 ist ein Handgriff 14 zum Öffnen und Schließen des Klappenhahns 1 angebracht.

Der Klappenhahn 1 ist mittels einer Überwurfmutter 15 aus Kunststoff an dem Auslaufstutzen 16 eines Flüssigkeitsbehälters 17, z.B. eines Kunststoff-Innenbehälters eines Palettenbehälters, befestigt, wobei der Flüssigkeitsbehälter 17 mit dem mit einem Außengewinde 18 versehenen Auslaufstutzen 16 einteilig durch Blasformen hergestellt ist.

Die Überwurfmutter 15 ist zwischen einem Bund 19 des Einlaufstutzens 7 und den Lagerstutzen 11, 12 des Hahngehäuses 2 für die Drehwelle 10 der Klappenscheibe 3 unverlierbar und verschiebbar auf dem Einlaufstutzen 7 des Hahngehäuses 2 gehalten.

Beim Einziehen des Einlaufstutzens 7 des Hahngehäuses 2 in den Auslaufstutzen 16 des Flüssigkeitsbehälters 17 durch das Aufschrauben der auf dem Einlaufstutzen 7 des Hahngehäuses 2 unverlierbar gehaltenen Überwurfmutter 15, die mit einer Ringschulter 20 an dem Bund 19 des Einlaufstutzens 7 angreift, wird ein auf dem Einlaufstutzen sitzender Dichtring 21 zwischen dem Bund 19 und dem äußeren Ende 16a des Auslaufstutzens 16 des Flüssigkeitsbehälters 17 eingespannt und dadurch das Gehäuse 2 des Klappenhahns 1 gegen den Flüssigkeitsbehälters 17 abgedichtet.

Zur Herstellung des Klappenhahns 1 mit der auf dem Einlaufstutzen 7 des Hahngehäuses 2 unverlierbar gehaltenen Überwurfmutter 15 wird in einem ersten Verfahrensschritt die Überwurfmutter 15 in einem ersten Spritzgießwerkzeug hergestellt. Anschließend wird die fertige Überwurfmutter 15 in ein zweites Spritzgießwerkzeug eingelegt und danach in einem zweiten Verfahrensschritt das Hahngehäuse 2 derart hergestellt, daß der Einlaufstutzen 7 des Hahngehäuses 2 die Durchgangsöffnung 22 der Ringschulter 20 und die Gewindebohrung 23 der Überwurfmutter 15 mit Spiel durchsetzt und der Bund 19 des Einlaufstutzens 7 des Hahngehäuses 2 innerhalb der Überwurfmutter 15 angeordnet ist.

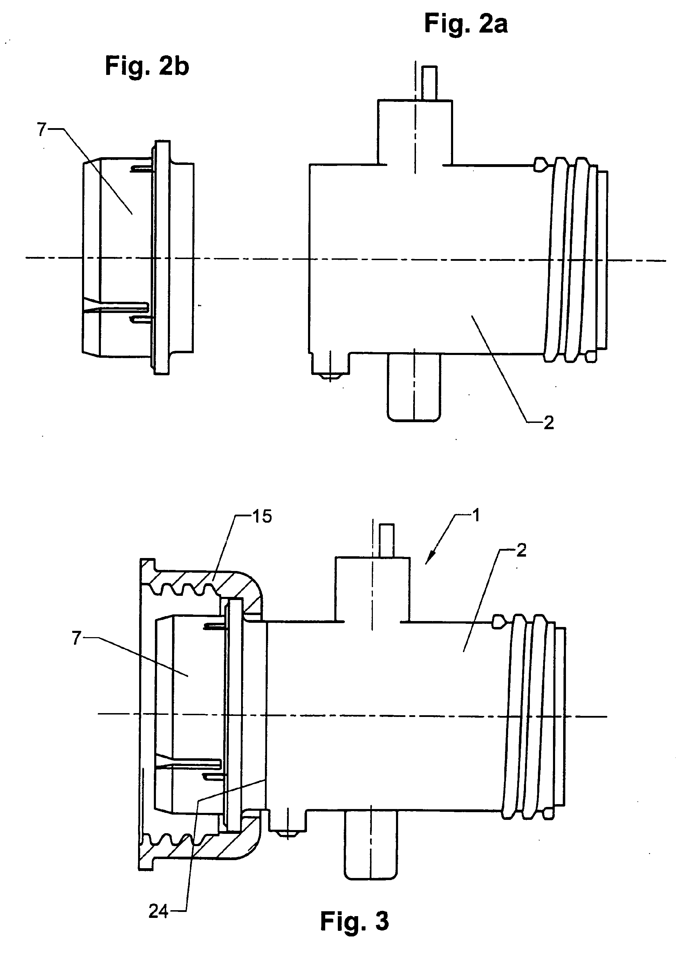

Ein zweites Verfahren zur Herstellung des Klappenhahns 1 mit der Überwurfmutter 15 ist dadurch gekennzeichnet, daß in einem ersten Verfahrensschritt das Hahngehäuse 2 und der Einlaufstutzen 7 desselben als gesonderte Teile spritzgegossen werden und in einem anschließenden zweiten Verfahrensschritt der Einlaufstutzen 7 mit einer aufgeschobenen Überwurfmutter 15 an der in Fig. 3 durch das Bezugszeichen 24 gekennzeichneten Stelle an das Hahngehäuse 2 angeschweißt wird.

Hahngehäuse 2 und Überwurfmutter 15 des Klappenhahns 1 werden entsprechend den erforderlichen Festigkeitseigenschaften aus unterschiedlichen Kunststoffmaterialien hergestellt.

## Patentansprüche

1. Verfahren zur Herstellung einer als Kunststoff-Spritzgußteil gefertigten Entnahmearmatur, insbesondere eines Klappen- oder Kugelhahns, für Transport- und Lagerbehälter aus Kunststoff oder Metall für Flüssigkeiten, mit einem Armaturengehäuse, das einen Einlaufstutzen mit einer auf diesem zwischen einem Bund des Einlaufstutzens und den Lagerstutzen des Armaturengehäuses für die Drehwelle des Schließelements unverlierbar gehaltenen und verschiebbaren Überwurfmutter zum Anschrauben des Armaturengehäuses an den mit einem Außengewinde versehenen Auslaufstutzen des Flüssigkeitsbehälters und einen Auslaufstutzen besitzt, **dadurch gekennzeichnet, daß** in einem ersten Verfahrensschritt die Überwurfmutter (15) in einem ersten Spritzgießwerkzeug hergestellt wird, anschließend die Überwurfmutter (15) in ein zweites Spritzgießwerkzeug eingelegt und danach in einem zweiten Verfahrensschritt das Armaturengehäuse (Hahngehäuse 2) in dem zweiten Spritzgießwerkzeug derart hergestellt wird, daß der Einlaufstutzen (7) des Armaturengehäuses (2) die Durchgangsöffnung (22) der Ringschulter (20) und die Gewindebohrung (23) der Überwurfmutter (15) mit Spiel durchsetzt und der Bund (19) des Einlaufstutzens (7) des Armaturengehäuses (2) innerhalb der Überwurfmutter (15) angeordnet ist.

2. Verfahren zur Herstellung einer als Kunststoff-Spritzgußteil gefertigten Entnahmearmatur nach dem Oberbegriff des Anspruchs 1, **dadurch gekennzeichnet, daß** in einem ersten Verfahrensschritt das Armaturengehäuse (Hahngehäuse 2) und der Einlaufstutzen (7) desselben als gesonderte Teile spritzgegossen werden und in einem anschließenden zweiten Verfahrensschritt der Einlaufstutzen (7) mit einer aufgeschobenen Überwurfmutter (15) an das Armaturengehäuse (2) angeschweißt wird.

3. Verfahren nach Anspruch 1 und 2, **dadurch gekennzeichnet, daß** das Armaturengehäuse (2) und die Überwurfmutter (15) aus verschiedenen Kunststoffmaterialien hergestellt werden.
